# EUROPEAN PATENT APPLICATION

(11) **EP 2 712 169 A1**
(43) Date of publication of application: **26.03.2014**
(21) Application number: 13184964.8
(22) Date of filing: 18.09.2013
(51) Int. Cl.: H04N 1/21, H04N 9/79, H04N 5/77

(54) **Methods for generating video and multiple still images simultaneously and apparatuses using the same**

(30) Priority: 20.09.2012 US 201261703625 P; 06.09.2013 US 201314020466
(71) Applicant: HTC Corporation, Taoyuan County 330 (TW)
(72) Inventor: Dai, Chen-Si, 330 Taoyuan City (TW); Tseng, Fu-Chang, 330 Taoyuan City (TW); Whitehorn, Symon J, Bellevue, WA Washington 98005 (US); Wu, Jing-Lung, 330 Taoyuan City (TW); Chueh, Hsin-Ti, 330 Taoyuan City (TW)
(74) Representative: Konkonen, Tomi-Matti Juhani

(57) **Abstract**

An embodiment of a method for generating multiple still images and a video file in parallel is disclosed. A first series of images from an image sensor is provided to at least one buffer. A second series of images are captured in response to reception of a user input for performing a multi-capture operation. The process further provides the first series of images from the buffer for processing along at least two processing paths concurrently with the capturing of the second series of images. The two processing paths then process the second series of images, and the processed first series of images and second series of images are stored into a memory unit. At least one of the processing paths processes only a predetermined portion of the first series of images and the second series of images. Images processed by each of the two processing paths are stored, respectively.

## Description

### CROSS REFERENCE TO RELATED APPLICATIONS

This application claims the benefit of U.S. Provisional Application No. 61/703,625 filed on September 20, 2012, the entirety of which is incorporated by reference herein.

### BACKGROUND

### Technical Field

The embodiment of the present invention relates to a system and a method thereof for capturing video frames and multiple image frames simultaneously, and in particular, relates to a system and a method thereof applying a pre-buffering mechanism for reserving images prior to the triggering of a camera/video shutter.

### Description of the Related Art

In conventional digital cameras, digital video recorders, mobile phones or others, video recording and taking photos cannot be performed at the same time. Specifically, video recording and camera burst shooting cannot be performed simultaneously. Accordingly, when performing either, a user must interrupt the original function, to switch to the other function via a UI (user interface), resulting in inconvenience. Thus, users often miss opportunities for video recording or taking photos due to the time needed for the switching process. Moreover, it is at times too late to press a button or a shutter and misses something interesting, exciting or surprising. Accordingly, there is a need for electronic devices that provide the capability of performing video recording and camera capture simultaneously. It is also desirable to have a pre-buffering mechanism for reserving images prior to the triggering of a camera/video shutter.

### BRIEF SUMMARY

The embodiments of the invention disclose apparatuses and methods for generating a video file and still images simultaneously. More specific, the embodiments disclose a pre-buffering mechanism for buffering images prior to the triggering of a camera/video shutter.

An embodiment of a method for generating multiple still images and a video file in parallel is introduced. A first series of images from an image sensor is received and provided to at least one buffer. A second series of images are captured in response to reception of a user input for performing a multi-capture operation. The first series of images from the buffer are provided for processing along at least two processing paths concurrently with the capturing of the second series of images. The two processing paths then process the second series of images, and the processed first series of images and second series of images are stored into a memory unit. At least one of the processing paths processes only a predetermined portion of the first series of images and the second series of images. Images processed by each of the two processing paths are stored, respectively.

An embodiment of a method for generating video file and burst shooting images concurrently is introduced. A plurality of first consecutive images by an image sensor is captured. Next, the first consecutive images in a first resolution are provided to a video processing module to generate a video file and a first portion of the first consecutive images in a second resolution are provided to a camera processing module to generate burst shooting images concurrently in parallel, where the first resolution is lower than or equal to the second resolution. The image sensor captures a plurality of second consecutive images after receiving a user input for capturing video and burst shooting images. Next, the second consecutive images in the first resolution are provided to the video processing module to generate the video file, and a second portion of the second consecutive images in the second resolution are provided to the camera processing module to generate the burst shooting images concurrently in parallel. The video file and the burst shooting images are stored together in a memory unit.

An embodiment of an apparatus for generating video file and burst shooting images concurrently is introduced. The apparatus comprises an image sensor, an image processor, a user interface and a memory unit. The image sensor is configured to capture a plurality of first consecutive images and a plurality of second consecutive images during different time periods, respectively. The image processor is configured to provide first consecutive images in a first resolution to a video processing module to generate a video file, and a first portion of the first consecutive images in a second resolution to a camera processing module to generate burst shooting images concurrently in parallel, and provide the second consecutive images in the first resolution to the video processing module to generate the video file, and a second portion of the second consecutive images in the second resolution to the camera processing module to generate the burst shooting images concurrently in parallel, where the first resolution is lower than or equal to the second resolution. The user interface is configured to receive a user input for capturing video and burst shooting images. The memory unit is configured to store the video file and the burst shooting images together.

A detailed description is given in the following embodiments with reference to the accompanying drawings.

### BRIEF DESCRIPTION OF THE DRAWINGS

The present invention can be fully understood by reading the subsequent detailed description and examples with references made to the accompanying drawings, wherein:

FIG. 1 depicts an algorithm being performed in an image capture system according to an embodiment of the invention;

FIG. 2 is a flowchart showing a method for parallel image capturing and processing according to an embodiment of the invention;

FIG. 3 depicts a schematic diagram of an image processing system according to an embodiment of the invention;

FIG. 4 illustrates a schematic diagram of the image buffering according to an embodiment of the invention;

FIG. 5 depicts a schematic diagram of an image processing system according to another embodiment of the invention;

FIG. 6 illustrates a schematic diagram of performing a video recording and a camera burst shooting simultaneously according to an embodiment of the invention; and

FIG. 7 is a flowchart showing a method for generating multiple still images and a video file in parallel according to an embodiment of the invention.

### DETAILED DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

The present invention will be described with respect to particular embodiments and with reference to certain drawings, but the invention is not limited thereto and is only limited by the claims. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

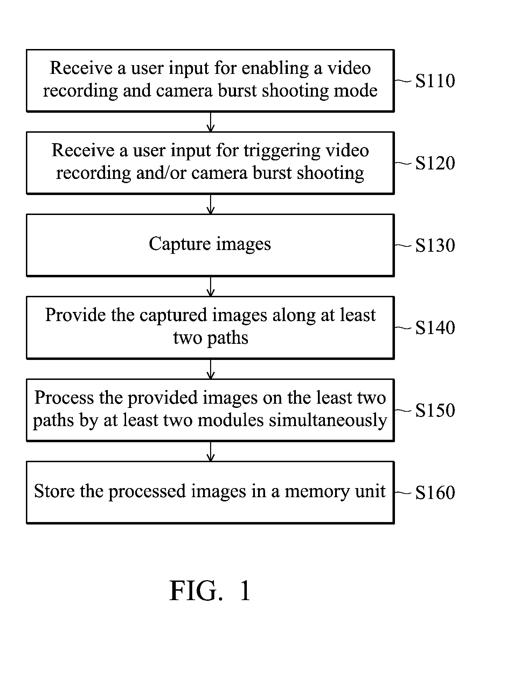

Please refer to FIG. 1, which depicts an algorithm being performed in an image capture system according to an embodiment of the invention. The image capture system supports performing video recording and camera burst shooting at the same time. The image capture system may provide a UI (user interface) to receive a user input for enabling a video recording and camera burst shooting mode (step S110), and a user input for triggering video recording and/or camera burst shooting (step S120). The UI may display a menu item on a display panel to advise a user to turn on or turn off the video recording and camera burst shooting mode, and the user may press buttons, hard keys, etc., disposed on one side of an electronic device, such as a digital camera, a digital video recorder, a mobile phone, etc., or make a gesture with the menu item to complete the enabling or disabling. Alternatively, the video recording and camera burst shooting mode may be enabled automatically once a camera module has been activated. Moreover, a user may press a button or a key disposed on one side of the electronic device, or make contact with an indicative icon on a touch panel for triggering. The video recording and camera burst shooting mode is a mode for performing video recording and camera burst shooting simultaneously. The video recording is used to capture multiple still images and convert the captured images into a video clip while the camera burst shooting is used to capture and save multiple still images in quick succession. In response to the user input, a camera module starts to capture images (step S130). The camera module may comprise an image sensor, such as a CMOS (complementary metal-oxide-semiconductor) or CCD (charge-coupled device) sensor, to detect an image in the form of a red, green and blue color, and readout electronic circuits for collecting the sensed data from the image sensor. The captured images are then provided along at least two paths, wherein each path may have different settings (step S140). The settings may comprise a frame rate, a resolution and/or other parameters. The term "path" hereinafter may refer to as a processing path comprising multiple modules capable of performing a wide range of operations on images output from an image processor, such as an ISP (image signal processor) or an electronic module providing similar but different functions, and the transferring routes therebetween as well. One path may provide the images to a video processing module in a first resolution at a first frame rate, and may be referred to as a video processing path. Another path may provide the images to a camera processing module in a second resolution at a second frame rate, and may be referred to as a still image processing path. Still another path may provide the images to a preview module in the same or a different resolution at the same or a different frame rate as/from that to the video processing module, and may be referred to as a preview processing path. The resolution of the sensed images by the image sensor may be configured to be the same as the second resolution. The frame rate may be referred to as a frequency (rate) at which the image processor produces consecutive images, typically denoted as fps (frame per second). The resolution may be referred to as a pixel count in an image frame. Please note that each path may provide the images to one or more modules. For example, a video processing module and a preview module may receive images from the same path. The paths send the images of different settings to respective processing modules in parallel. Upon receiving images from the two paths, corresponding modules process the images simultaneously (step S150). The term "simultaneously" means that at least two modules operate at the same time. In other words, the modules operate independently and do not interfere with one another. For example, a video processing module may perform video processing while the camera processing module performs camera image processing. In the conventional design, an image processor provides images of only one resolution and at only one frame rate to multiple processing modules with a switching mechanism. For instance, the image processor continuously provides high resolution images at a high frame rate to the downstream processing modules selectively. When needing low resolution images for subsequent encoding, a conventional processing module, such as an image processing module, needs extra effort to down-sample the high resolution images. When needing a low frame rate for subsequent encoding, the conventional processing module needs extra effort to drop unnecessary images. When at least two modules require different resolutions of images at different frame rates, it may be advantageous to provide images with different resolutions and at different frame rates to them via different paths according to the embodiment of the invention. This way, the downstream modules can encode the received images without the additional switching mechanism, down-sampling process, and image dropping. The images processed by the modules are then stored in the same or different memory units (step S160). It is to be understood that the images captured at the same or similar time point and processed by different modules may be referenced with one another in the memory unit. For example, if one or more camera images are captured during video recording, the video frames may be associated with the camera still images by a tag or link stored in the metadata or header file. The tag or link may include, but is not limited to, a frame/image ID (identity) showing a serial number in an image sequence, or a timestamp showing a specific moment at which an image is captured by the camera module or processed by the image processor. Similarly, the camera still images may be associated with the video frames by a recorded tag or link in the metadata or header file. As a result, users may easily find out a related video clip via a camera still image, and vice versa.

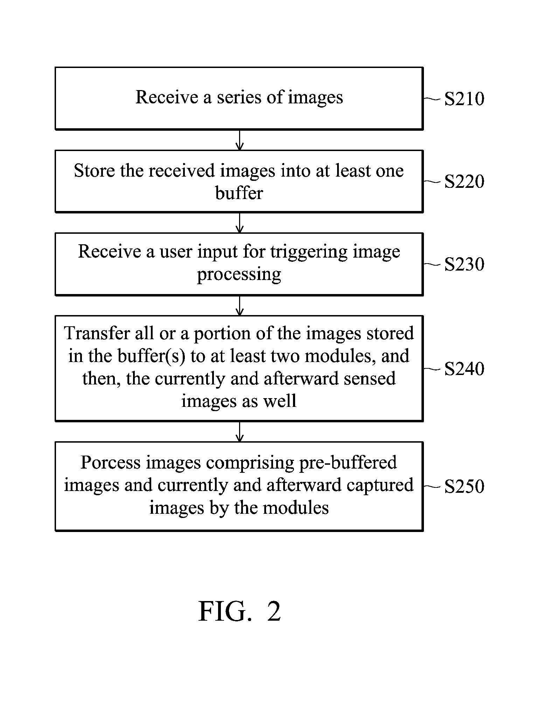

FIG. 2 is a flowchart showing a method for parallel image capturing and processing according to an embodiment of the invention. First a series of images are received from an image sensor (step S210). The image sensor may output raw images to an ISP for further processing. The ISP may perform various processes, such as color conversion, image scaling, and/or others, on the raw images. The color space of the raw images may be converted into a new one, for example, from RGB into YUV, which is used widely in video and still image compression schemes. Raw images may be further resized by an image scaling algorithm into a resolution suitable for a downstream module. To guide a user, the ISP may constantly provide preview images to a preview module for display purposes. The preview images are displayed on a display panel and not saved. Normally, the output images are not encoded until a video or camera shutter is pressed. Regardless of the triggering of a video recorder and/or camera burst shot, in the embodiment, the images are stored into at least one buffer constantly once the image sensor is activated (step S220). This may be referred to as a pre-buffering mechanism, wherein a predetermined number or time period of captured images is stored prior to triggering of a video recording and/or camera burst shooting. The buffer has a predetermined size and the images stored therein are updated at a predetermined frame rate. For instance, 60MB may be allocated for the buffer to cache 30 images, at most 2MB per frame, and update one image frame about every 1/30 second. Through the aforementioned exemplary pre-buffering mechanism, 30 images that are most recently captured before the triggering of a video recording and/or camera burst shooting are kept in the buffer. When a user is too late to trigger a video recording and/or camera burst shooting, it may be an advantageous to buffer images for a predetermined time period prior to the triggering moment, because the pre-buffered images can be encoded into a video file or still image files. It is also feasible to use two or more buffers holding images with different resolutions, which are updated at different frame rates, respectively. For example, images stored in one buffer may be updated in 30 fps, and images stored in another buffer may be updated in 15 fps. Images stored in one buffer may be of 4 or 8 megapixels while images in another may be of 8 or 13 megapixels. In response to user input for triggering image processing, such as a video recording and/or camera burst shooting (step S230), all or a portion of the images stored in the buffer(s) are transferred to at least two modules and the ongoing sensed images are then transferred to the modules for encoding (step S240). That is, all or a portion of the images are provided in sequence from the buffer for processing along at least two paths concurrently with the capturing of the ongoing sensed series of images, where each path comprises at least one module capable of processing the buffered series of images. The ongoing sensed images may be first buffered and then sent to the modules or directly sent to the modules without buffering. It will be appreciated that the subsequently sensed images will constantly be sent to the modules with or without buffering after the user input for processing images until a termination condition is satisfied. For example, when receiving the user input, the buffer(s) may dump all or a portion of images to the video and/or the camera processing module, and constantly obtain captured images from the image senor module for a predetermined time period, such as two seconds, three seconds, or longer, or until the user stops the process. Please note that the buffer(s) may send images to a processing module at a full frame rate (the same as the input frame rate to the buffer), which means images temporarily stored in the buffer are all sent out to the downstream modules. In another example, the buffer may send images to a processing module at an adjusted frame rate, which means some images may be skipped or discarded from being processed. Then the processing modules perform predetermined operations on the received images including the pre-buffered images and ongoing captured images (step S250). The pre-buffered images may be collectively referred to as first images, which are captured prior to the reception of the user input, while the images captured upon or after the reception of user input may be collectively referred to as second images. In one example, since a video buffer and a camera buffer may be present, the video buffer sends images to the video processing module and the camera buffer send images to the camera processing module. Due to the condition where the settings of the video mode and the camera mode may be different, the video buffer may receive images with a lower resolution and at a higher frame rate than that for the camera buffer. In another example, both the video processing module and the camera processing module may share the same buffer. The buffer may be separated into two storage spaces and allocated for the video processing module and the camera processing module, respectively.

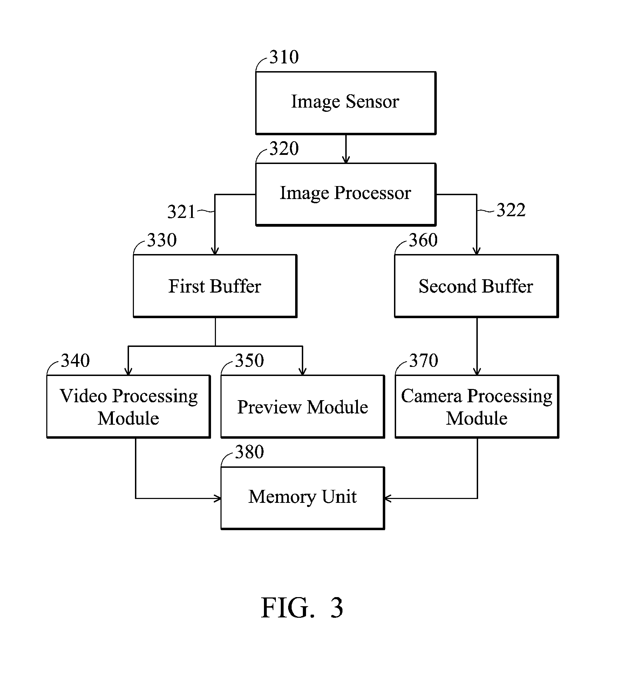

FIG. 3 depicts a schematic diagram of an image processing system according to an embodiment of the invention. The system comprises the image sensor 310 for generating raw images, the image processor 320, such as an ISP, or others, for performing operations on the raw images and to provide image frames along the first path 321 and the second path 322. The image processor 320 may process the received images and scale the images into a particular resolution for output. In one example, the image processor 320 may provide first images in a first resolution along the first path 321 and provide second images in a second resolution along the second path 322. Furthermore, in another example, the image processor 320 may scale the sensed images into first images in a first resolution and output the scaled first images at a first frame rate, and meanwhile scale the sensed images into second images in a second resolution and output the scaled second images at a second frame rate concurrently.

The first images of the first path are sent to and temporarily stored in the first buffer 330, and the second images of the second path are sent to and temporarily stored in the second buffer 360. The first buffer 330 and the second buffer 360 may be of different sizes, depending on the system requirements and the application needs. The first buffer 330 and the second buffer 360 may be updated at the first frame rate and the second frame rate, respectively. Therefore, the oldest image will be overwritten by the newest image once the first buffer 330 or the second buffer 360 is full. The buffers 330 and 360 may be configured in the FIFO (first-in-first-out) fashion to receive and output images. It is to be understood that, a conventional image processor has limited capabilities of generating images with only one resolution and outputs the generated images at only one frame rate to a buffer. The image processor 320 described herein according to an embodiment of the invention may be capable of generating images in different resolutions and outputting the generated images at different frame rates via the paths 321 and 322, which are dedicated to the buffers 330 and 360, respectively. In an embodiment, the first buffer 330 provides output to a preview module 350 and also provides output to a video processing module 340 upon a video event is received, where the video event may be detected by a UI. The buffer 330 may require images in a first resolution at a first frame rate, which are configured by a user. For example, the first buffer 330 may be configured to receive the first images of the first resolution designated by a user for video recording, and the first frame rate is set according to a preview frame rate or designated by user for video recording. The second buffer 360 provides output to a camera processing module 370 at a second frame rate upon receiving a camera event, where the camera event may be detected by a UI. The second images may be in a second resolution designated by a user for camera shooting, and received at a second frame rate predetermined or designated by a user for the camera burst shooting mode. Please note that the first frame rate and the second frame rate may be controlled by the image processor 320 or another control module implemented in hardware, software, or a combination thereof. The image processor 320 may control the frame rate by dropping or skipping the sensed images. Therefore, the image sequences of the first images and the second images may not be identical, and the first images or the second images may be a subset of the whole image sequence received from the image sensor 310. The image processor 320 may alternatively control the frame rate by delaying the output of the sensed images. For example, the image processor 320 delays the output of the second images by certain cycles. In this case, the first images and the second images may be totally or partially identical, and their resolutions might be different.

Upon receiving the first images from the first buffer 330, the preview module 350 may send the first images to a display unit allowing users to view the objects to be captured. Upon receiving a video event which is triggered by user input, the video processing module 340 receives the first images from the first buffer 330 and encodes the first images into a video file in a predetermined format. The encoded video file is then stored in a memory unit 380. The video processing module 340 may implement video compression techniques, such as those described in the standards defined by MPEG-2, MPEG-4, ITU-T H.263, ITU-T H.264, AVC (Advanced Video Coding), HEVC (High Efficiency Video Coding), and extensions of such standards. Video compression techniques perform spatial (intra-picture) prediction and/or temporal (inter-picture) prediction to reduce or remove redundancy inherent in image sequences. Upon receiving a camera event which is also triggered by user input, the camera processing module 370 receives the second images from the second buffer 360 and encodes the received images into a still image file in a predetermined format. In some situations, the video event and the camera event may be triggered at the same time or separately. The camera processing module 370 may implement still image compression techniques, such as those described in the standard defined by JPEG, TIFF, and extensions of such standard. Still image compression techniques reduce or remove spatial redundancy inherent within an image. It may be an advantageous that the camera processing module 370 and the video processing module 340 receives images from different buffers 360 and 330, respectively, because then the video processing module 340 and the camera processing module 370 may be triggered to perform processing concurrently to do the video recording and the camera burst shots at the same time. The components 310 to 380 may be incorporated in an enclosure to form an electronic device, such as a digital camera, a video recorder, a mobile phone, or other consumer electronic devices.

It should be appreciated, that any notational arrangements can he used to indicate the captured and/or processed images, and the disclosed embodiment does not intend to apply the exact numerical labels to distinguish images by different paths. For example, it is possible to collectively refer to the images, which are captured and pre-buffered in the buffers 330 and 360 before the reception of the video event or the camera event, as first images, and refer to the images, which are captured upon and after the reception of the video event or the camera event, as second images.

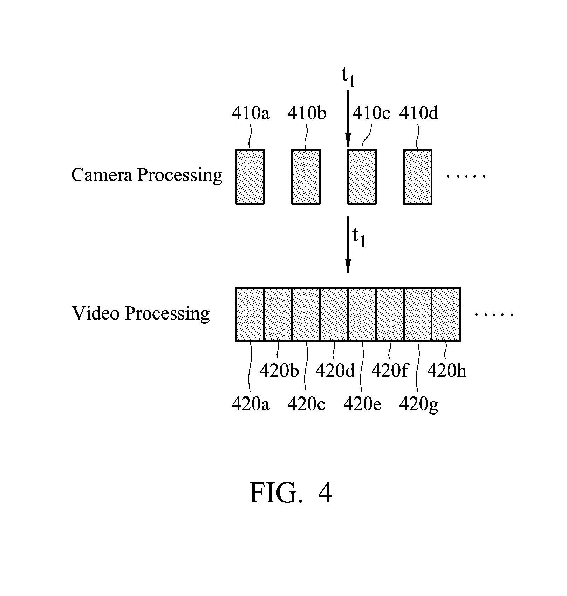

FIG. 4 illustrates a schematic diagram of the image buffering according to an embodiment of the invention. It is assumed that a first frame rate for video recording is twice of a second frame rate for camera burst shooting, and that video recording and camera burst shooting may be triggered by a single user input. Both the first buffer 330 and the second buffer 360 continuously receive first images and second images from the image processor 320. Upon a shutter being pressed at a moment t1, the first images 420a to 420d pre-buffered in the first buffer 330 are outputted to the video processing module 340, and the second images 410a and 410b pre-buffered in the second buffer 360 are outputted to the camera processing module 370 for encoding, respectively. Also, the first images 420e to 420h and the second images 410c to 410d generated by the image processor 320 after the moment t1 are outputted to the video processing module 340 and the camera processing module 370, respectively. As can be observed, the image processor 320 provides images to the second buffer 360 by dropping one of every two images.

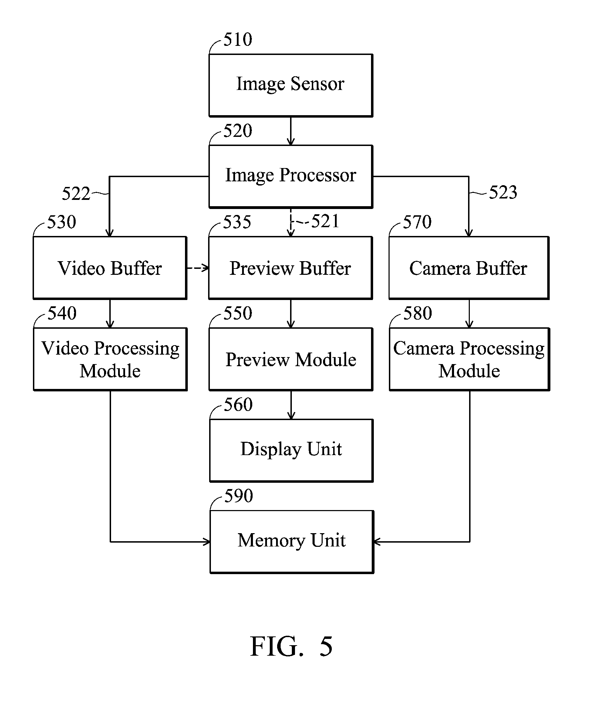

FIG. 5 depicts a schematic diagram of an image processing system according to another embodiment of the invention. Similar to FIG. 3, the image sensor 510 provides raw images to the image processor 520, such as an ISP, or others, and the image processor 520 may perform operations on the raw images. In the embodiment, the image processor 520 may provide output to three paths 521 to 523, each of which may have a particular setting and correspond to a processing module. On the first path 521, the image processor 520 may convert the raw images, scale the converted images to conform to a preview size (in a first resolution) and provide the scaled images to the preview buffer 535 then to the preview module 550 for viewing by a user on the display unit 560. The preview images may also be used to produce thumbnails. On the second path 522, the image processor 520 may convert the raw images, scale the converted images to conform to a video resolution (in a second resolution) and temporarily store the scaled images in the video buffer 530. The video buffer 530 may be updated with new video frames at a video frame rate. Please note that the preview buffer 535 may alternatively be configured to receive images from the video buffer 530 rather than from the image processor 520. In this case, the preview size is the same as the video resolution. Yet in another embodiment, the preview module 550 may share the video buffer 530 with the video module 530. When a user triggers a video shutter, the video buffer 530 outputs the video frames to the video processing module 540, such as a video codec, for encoding the video frames into a proper format, such as an MPEG-2, MPEG-4, ITU-T H.263, ITU-T H.264, AVC, or HEVC format, or extensions of such standards, etc. The video shutter may be a button or a key disposed on one side of an electronic device, such as a digital camera, a video recorder, a mobile phone, or others, or a virtual key displayed on a touch panel, or others. As described above, the video buffer 530 may output the buffered video frames before the video shutter is pressed, and/or subsequent video frames after the video shutter is pressed. Namely, the video buffer 530 may be configured to send a predetermined number of video frames, such as 30 video frames, or video frames corresponding to a time interval, such as the video frames stored in one second, before the video shutter is pressed. After that, the video buffer 530 continues to update and output new video frames to the video processing module 540.

On the third path 523, the image processor 520 may convert the raw images, scale the converted images to conform to a camera resolution (in a third resolution) and temporarily store the scaled images in the camera buffer 570. The camera buffer 570 may be updated with new still images by camera burst shooting frequency. The camera shutter may be a button or a key disposed on one side of an electronic device, such as a digital camera, a video recorder, a mobile phone, or others, or a virtual key displayed on a touch panel, or others. When a user triggers a camera shutter, the camera buffer 570 outputs still images to the camera processing module 580, such as a still image encoder, for encoding the output images into a proper format, such as a JPEG format, etc. Similar to the video buffer 530, the camera buffer 570 may output the still images before the camera shutter is pressed, and/or subsequent still images after the camera shutter is pressed. Namely, the camera buffer 570 may be configured to send a predetermined number of still images, such as 15 still images, or still images corresponding to a time interval, such as the still images stored in one second, before the camera shutter is pressed. After that, for each burst shooting, the camera buffer 570 may send a predetermined number of still images to the camera processing module 580, which may be defined by default or by user selection. Please note that the camera shutter and the video shutter may be referred to as a single user input. In one example, the video buffer 530 may continue to output video frames to the video processing module 540 until a stop signal is received, meanwhile the camera buffer 570 may be controlled in a way to provide still images to the camera processing module 580 up to a predetermined number or a predetermined time interval. In another example of the invention, the video shutter and the camera shutter are controlled separately. During the video recording, the user may press and hold the camera shutter to capture a series of still images continuously and concurrently with the video recording. The camera buffer 570 provides output to the camera processing module 580 from the time the camera shutter is pressed and hold till the time the camera shutter is released. In some embodiments, the video frame and the still images may be both in full resolution. The maximum frame rate of each may depend on the system constraints or the custom designs. The components 510 to 590 may be incorporated in an enclosure to form an electronic device, such as a digital camera, a video recorder, a mobile phone, or other consumer electronic devices.

It should be apparent, that any notational arrangements can he used to indicate the captured and/or processed images, and the disclosed embodiment does not intend to apply the exact numerical labels to distinguish images by different paths. For example, it is possible to collectively refer to the images, which are captured and pre-buffered in the buffers 530 and 570 before the reception of the video event or the camera event, as first images, and refer to the images, which are captured upon and after the reception of the video event or the camera event, as second images.

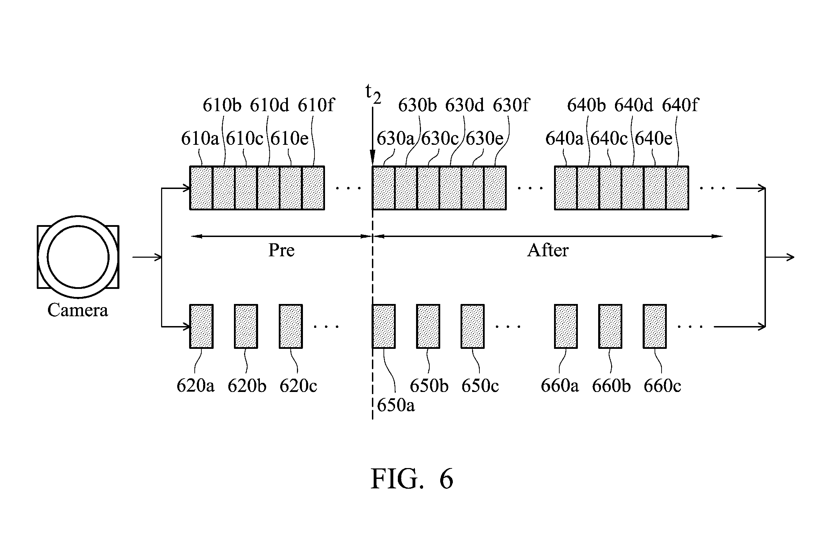

FIG. 6 illustrates a schematic diagram of performing a video recording and a camera burst shooting simultaneously according to an embodiment of the invention. The two operations (may be collectively refer to as a multi-capture operation) may be triggered by a single user input. A special mode may be provided for users. When the special mode is enabled, the video recording and the camera burst shooting are triggered together and continue for a predetermined time interval. For example, the captured video frames 610a to 610f and still images 620a to 620c from one second until the time point t2 the shutter is pressed are sent out from the video buffer 530 and the camera buffer 570 for relevant encoding, respectively. Within two seconds after the time point t2, the captured video frames 630a to 630f, 640a to 640f, and the followings, and still images 650a to 650c, 660a to 660c, and the followings as well, are sent out from the video buffer 530 and the camera buffer 570 for relevant encoding, respectively. Therefore, users can get a video file of the predetermined length lasting for 3 seconds. For example, from -1 to 2 seconds, with respect to the triggered time point. Also, still images during the three seconds are automatically captured and encoded. A UI may be provided for a user to configure the time interval, video/camera resolution and/or video/camera frame rate. The encoded video clip and camera photos may be stored in the memory unit 590 and associated with each other by adding tags or links in metadata, for example.

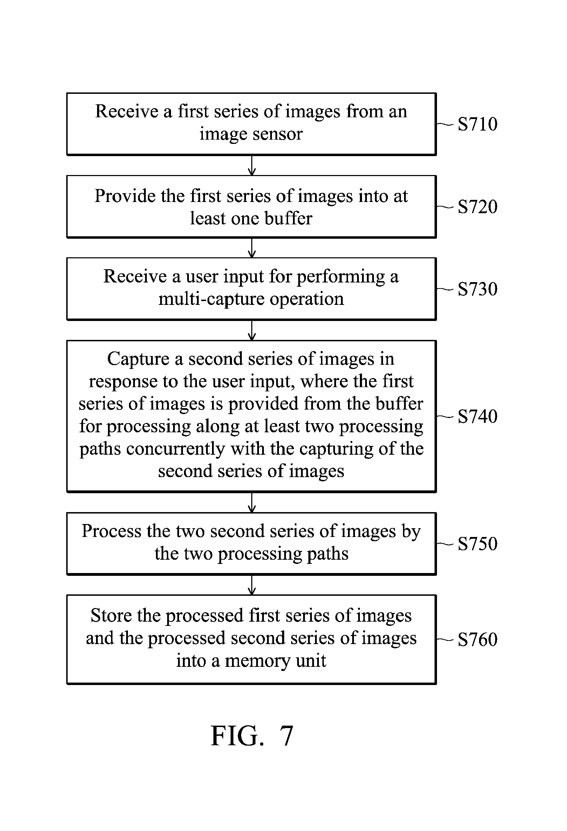

FIG. 7 is a flowchart showing a method for generating multiple still images and a video file in parallel according to an embodiment of the invention. The method may be performed in the exemplary image processing system as shown in FIG. 3 or FIG. 5. A first series of images are received from an image sensor (step S710), such as the image sensor 310 or 510. The first series of images are provided into at least one buffer (step S720). The buffer(s) may be the first buffer 330 and/or the second buffer 360 as shown in FIG. 3. The output buffer(s) may be the first buffer 530 and/or the second buffer 570 as shown in FIG. 5. A user input for performing a multi-capture operation is received (step S730). The user input may be received via hardware shutter, software button and/or other suitable input mechanism. A second series of images are captured in response to the user input, where the first series of images is provided from the buffer(s) for processing along at least two processing paths concurrently with the capturing of the second series of images (step S740). The two series of images are processed by the two processing paths (step S750). Each of the two processing paths corresponds to processing of a specific image type, such as still image (photo) and motion image (video). The processed first series of images and the processed second series of images are stored into a memory unit (step S760), such as the memory unit 380 or 590. The two series of images processed by the first path may be stored in a first image format and the two series of images processed by the second processing path may be stored in a second image format. In embodiments of the invention, the series of images processed by the two processing paths may be stored by associating with each other by adding file link or tag. In other embodiments of the invention, the series of images processed by the two processing paths may be stored in a joint image format. It is to be understood that at least one of the processing paths may process only a predetermined portion of the first series of images and the second series of images, and images processed by each of the two processing paths are stored respectively. It will be appreciated that steps S710 and S720 may be collectively referred to as a pre-buffering mechanism, wherein a predetermined number or time period of captured images is stored prior to a user input for performing a multi-capture operation.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for generating multiple still images and a video file in parallel, comprising:
receiving a first series of images from an image sensor;
providing the first series of images into at least one buffer;
receiving a user input for performing a multi-capture operation;
capturing a second series of images in response to the user input;
providing the first series of images from the buffer for processing along at least two processing paths concurrently with the capturing of the second series of images;
processing the second series of images by the two processing paths; and
storing the processed first series of images and the processed second series of images into a memory unit,
wherein at least one of the processing paths processes only a predetermined portion of the first series of images and the second series of images, and images processed by each of the two processing paths are stored, respectively.

2. The method of claim 1, wherein the providing of the first series of images further comprises:
providing a predetermined portion of the first series of images along a first processing path,
wherein the predetermined portion of the first series is selected by a first frame rate.

3. The method of claim 2, wherein the processing of the second series of images further comprises:
processing the predetermined portion of the second series of images by the first processing path.

4. The method of claim 1, wherein the processing paths comprise a still image processing path and a video processing path.

5. The method of claim 4, wherein the processing paths further comprises a preview processing path.

6. The method of claim 1, wherein the first series of images are captured by the image sensor during a first predetermined time period prior to the receiving of the user input, and wherein the second series of images are captured by the image sensor during a second predetermined time period after the receiving of the user input.

7. The method of claim 1, wherein the two processing paths process the images in different resolutions and at different frame rates respectively.

8. A method for generating video file and burst shooting images concurrently, comprising:
capturing a plurality of first consecutive images by an image sensor;
receiving a user input for capturing video and burst shooting images;
providing the first consecutive images in a first resolution to a video processing module to generate a video file and providing a first portion of the first consecutive images in a second resolution to a camera processing module to generate burst shooting images;
capturing a plurality of second consecutive images by the image sensor concurrently in parallel with the providing of the first consecutive images to the video processing module and the camera processing module;
providing the second consecutive images in the first resolution to the video processing module to generate the video file, and providing a second portion of the second consecutive images in the second resolution to the camera processing module to generate the burst shooting images concurrently in parallel; and
storing the video file and the burst shooting images together in a memory unit,
wherein the first resolution is lower than or equal to the second resolution.

9. The method of claim 8, further comprising:
displaying the first consecutive images and the second consecutive images in the first resolution on a display unit concurrently with the capturing of the first consecutive images and the second consecutive images.

10. The method of claim 8, wherein the capturing of the first consecutive images and the second consecutive images further comprises capturing the first consecutive images and the second consecutive images in the second resolution by the image sensor; or
wherein the capturing of the first consecutive images further comprises capturing the first consecutive images during a first predetermined time period prior to the receiving of the user input, and wherein the capturing of the second consecutive images further comprises capturing the second consecutive images during a second predetermined time period after the receiving of the user input.

11. The method of claim 8, wherein the providing of the first consecutive images and the second consecutive images further comprise:
providing the first consecutive images and the second consecutive images to the video processing module at a first frame rate; and
providing the first portion of the first consecutive images and the second portion of the second consecutive images to the camera processing module at a second frame rate,
wherein the first frame rate is higher than the second frame rate.

12. The method of claim 8, further comprising:
buffering the first consecutive images prior to receiving the user input;
wherein the buffering of the first consecutive images further comprises:
buffering the first consecutive images in the first resolution to a first buffer allocated for the video processing module; and
buffering the first portion of the first consecutive images in the second resolution to a second buffer allocated for the camera processing module.

13. The method of claim 8, further comprising:
scaling the first consecutive images into the first resolution and scaling the first portion of the first consecutive images into the second resolution by an image processor concurrently in parallel;
providing the first consecutive images in the first resolution at a first frame rate to the video processing module and providing the first portion of the first consecutive images in the second resolution at a second frame rate by the image processor concurrently in parallel;
scaling the second consecutive images into the first resolution and scaling the second portion of the second consecutive images into the second resolution by the image processor concurrently in parallel; and
providing the second consecutive images in the first resolution at the first frame rate to the video processing module and providing the second portion of the second consecutive images in the second resolution at the second frame rate by the image processor concurrently in parallel;
wherein the first frame rate is higher than the second frame rate.

14. An apparatus for generating video file and burst shooting images concurrently, comprising:
an image sensor, configured to capture a plurality of first consecutive images and a plurality of second consecutive images during different time periods, respectively;
an image processor, configured to provide a first consecutive images in a first resolution to a video processing module to generate a video file, and a first portion of the first consecutive images in a second resolution to a camera processing module to generate burst shooting images concurrently in parallel, and provide the second consecutive images in the first resolution to the video processing module to generate the video file, and a second portion of the second consecutive images in the second resolution to the camera processing module to generate the burst shooting images concurrently in parallel;
a user interface, configured to receive a user input for capturing video and burst shooting images; and
a memory unit, configured to store the video file and the burst shooting images together,
wherein the first resolution is lower than or equal to the second resolution.

15. The apparatus of claim 14, further comprising:
a display unit, configured to display the first consecutive images and the second consecutive images in the first resolution concurrently with the capturing of the first consecutive images and the second consecutive images.

16. The apparatus of claim 14, further comprising:
at least one buffer, configured to buffer the first consecutive images prior to receiving the user input;
wherein the at least one buffer further comprises:
a first buffer, configured to buffer the first consecutive images in the first resolution, and allocated for the video processing module; and
a second buffer, configured to buffer the first consecutive images in the second resolution, and allocated for the camera processing module.

17. A computer program product, comprising computer program code means configured to perform the method of any preceding claim 1-13.
